Europäisches Patentamt

European Patent Office

Office européen des brevets

(19)

(11) Veröffentlichungsnummer: **0 211 246 B1**

# EUROPÄISCHE PATENTSCHRIFT

(45) Veröffentlichungstag der Patentschrift: **24.07.91**

(21) Anmeldenummer: **86109142.9**

(22) Anmeldetag: **04.07.86**

(51) Int. Cl.5: **H04M 3/50,** H04M 3/54, H04M 3/42

(54) **Verfahren für eine Fernmeldeanlage, insbesondere für eine Fernsprechnebenstellenanlage mit mindestens einer Abfragestelle.**

(30) Priorität: **31.07.85 DE 3527508**

(43) Veröffentlichungstag der Anmeldung:
**25.02.87 Patentblatt 87/09**

(45) Bekanntmachung des Hinweises auf die
Patenterteilung:
**24.07.91 Patentblatt 91/30**

(84) Benannte Vertragsstaaten:
**AT BE CH FR GB IT LI NL SE**

(56) Entgegenhaltungen:
**DE-A- 3 024 787**
**DE-B- 1 059 048**
**DE-B- 1 142 393**

(73) Patentinhaber: **Siemens Aktiengesellschaft**
**Wittelsbacherplatz 2**
**W-8000 München 2(DE)**

(72) Erfinder: **Muyssen, John**
**Draaitopstrasse 61**
**BE-9050 Evergem(BE)**

**Beschreibung**

Die Erfindung betrifft ein Verfahren für eine Fernmeldeanlage, insbesondere für eine Fernsprechnebenstellenanlage, bei der in bestimmten Fällen eine Verbindungsanforderung zunächst zu mindestens einer Abfragestelle gelangt und bei der aufgrund einer besonderen, den Beginn oder das Ende einer vorgegebenen Bedarfszeit, z.B. der betriebsfreien Nachtzeit kennzeichnenden Signalisierung eine oder mehrere beliebigen Nebenstellen, die ggf.diese Abfragestelle hinsichtlich der Betriebsmerkmale und des Ausbaus ersetzen, für die Entgegennahme der während dieser Bedarfszeit eintreffenden und ihnen signalisierten Verbindungsanforderungen festlegbar sind und wobei für Verbindungsanforderungen, die von der Abfragestelle nicht unmittelbar weiter zu vermitteln sind, die Möglichkeit besteht, diese in einer Warteposition zu halten.
Ein entsprechendes Verfahren ist z.B aus der DE-A1-3 024 787 bekannt.

In der Fernsprechnebenstellenanlage werden Verbindungswünsche für einzelne Teilnehmerstellen, für die bestimmte Vermittlungszustände gegeben sind, zunächst zu der Abfragestelle geleitet. Dies ist beispielsweise dann der Fall, wenn sich die gewünschte Nebenstelle im Besetztzustand befindet, wenn diese Nebenstelle den Anrufschutz aktiviert hat oder wenn der Teilnehmer sich nicht meldet. Ist die gewünschte Teilnehmerstelle für die betreffende Gesprächsart nicht berechtigt, so wird die betreffende Verbindungsanforderung generell zu der Abfragestelle gelegt. Durch die Vermittlungstätigkeit der die jeweilige Abfragestelle bedienenden Person kann dann die gewünschte Verbindung der jeweiligen Teilnehmerstelle signalisiert und die Verbindung hergestellt werden. Für die Entgegennahme derjenigen Anrufe, die in der betriebsfreien Zeit beispielsweise zur Pausenzeit oder zur Nachtzeit eintreffen kann mindestens eine beliebige Nebenstelle autorisiert werden. Diese Festlegung erfolgt durch betriebstechnische Eingaben und es kann damit gleichzeitig eine entsprechende Abspeicherung und Bestimmung der dazu notwendigen Berechtigungen in einem von der zentralen Steuereinheit abzufragenden Speicher erfolgen. Der Beginn und das Ende desjenigen Zeitraums, in dem die ursprüngliche Abfragestelle bedienenden Person durch eine entsprechende Schaltinformation signalisiert. Zu diesem Umschaltzeitpunkt können sich Anrufe in einer Warteposition befinden. Diese müssen also beginnend mit dem in der Rangfolge nächsten anstehenden Anruf der vorbestimmten Nebenstelle, die die bisherige Abfragestelle in ihren Funktionen vertreten soll, zugeleitet werden. Es ist die Aufgabe der Erfindung dies mit einem äußerst geringen zusätzlichen Steuerungsaufwand zu ermöglichen.

Dies wird dadurch erreicht, daß in Abhängigkeit von der erfolgten besonderen Signalisierung bezogen auf die während dieser Signalisierung anstehende Verbindungsanforderung durch die die vermittlungstechnischen Abläufe steuernden zentralen Steuereinheit Vermittlungszustände simuliert werden, die auf der Grundlage der diesen Zuständen zugeordneten Teilabläufe die Übergabe an die Abfragestelle und die Auslösung dieser Pseudoverbindung betreffen und daß dadurch die weiterhin bestehende und einen entsprechenden Anforderungsanreiz bewirkende Verbindungsanforderung in gleicher Weise wie nachfolgende Anforderungen zu der für die Annahme von Anrufen in der vorgegebenen Bedarfszeit festgelegten Nebenstelle signalisiert wird und somit die tatsächliche Umschaltung vollzogen ist.

Die notwendige Umorganisation der Anrufe erfolgt also durch eine Verkettung von Funktionsabläufen, die bei bestimmten vermittlungstechnischen Zuständen einer Verbindung abgerufen werden. Man sorgt also dafür, daß zu dem Zeitpunkt, zu dem eine Abfragestelle als nicht mehr zuständig deklariert wird, diejenigen Anreize, die normalerweise diese Funktionsabläufe auslösen, erzeugt werden. So kann beispielsweise durch die Vorgabe des Besetztzustandes die Weiterleitung an die Abfragestelle simuliert werden. Daran schließt sich dann die Simulation des Auslösevorgangs für die Verbindung an. Damit wird dann ohne besonderen zusätzlichen Programmaufwand eine Situation geschaffen, die in Verbindung mit der durch die Bedienperson vorgenommenen Signalisierung der normalerweise für die vorgegebene Bedarfszeit vorgesehenen Situation entspricht.

Gemäß einer Weiterbildung der Erfindung wird aufgrund der Simulierung der Verbindungsauslösung in gleicher Weise wie dies bei Fehlen einer Verbindungsanforderung zum Zeitpunkt der mit Beginn oder mit dem Ende der vorgegebenen Bedarfszeit vorgenommenen Signalisierung der Fall ist, eine Kennung erzeugt und abgespeichert, die jeweils im Zusammenhang mit einer Verbindungsanforderung den für ihre Weiterleitung an die vorab festgelegte Nebenstelle notwendigen Funktionsablauf aktiviert.

In den Fällen, in denen für die festgelegte Nebenstelle das Leistungsmerkmal des Anrufschutzes aktiviert wurde, wird mit dem Übergang auf die Funktion als für die vorgegebene Bedarfszeit zuständige Nebenstelle diese Aktivierung ignoriert.

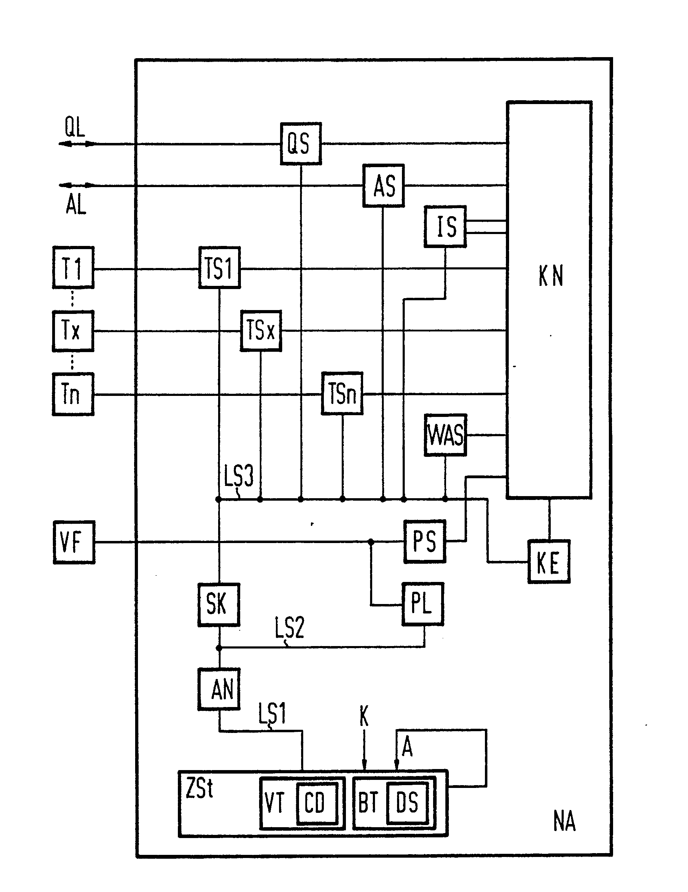

Nachfolgend wird anhand der Zeichnung ein Ausführungsbeispiel der Erfindung beschrieben, das nur die für das Verständnis notwendigen Einzelheiten enthält. Grundsätzlich kann das erfindungsgemäße Verfahren sowohl bei einer volldigitalen als auch bei einer analogen Vermittlungsanlage angewendet werden. Das Ausführungsbeispiel zeigt die Anwendung bei einer analogen speicherprogrammierten Nebenstellenanlage NA. Es sind die für den Standardverkehr vorgesehenen Verbindungssätze, nämlich ein Amtssatz AS, ein Internsatz IS, ein für die Aufnahme der im Mehrfrequenz-Verfahren abgegebenen Wahlinformationen vorhandener Aufnahmesatz WAS und ein bei einer über eine Verbindungsleitung zu einer weiteren Nebenstellenanlage heranzuziehender Leitungssatz QS dargestellt. Die Steuerung dieser genannten peripheren Einheiten kann von Teilsteuereinheiten bewirkt werden, denen eine zentrale Steuerrechnereinheit ZST übergeordnet ist. Diese überwacht und dirigiert dann alle Teilsteuereinheiten. Das Blockschaltbild zeigt zwei derartige Teilsteuereinheiten, nämlich die für die Steuerung der genannten Sätze einschließlich der einer Teilnehmerstelle jeweils zugeordneten Teilnehmersätze TS... und für die Einstellung von Koppelnetzteilen vorhandene Teilsteuereinheit SK sowie die für die Steuerung der mit einem Vermittlungsfernsprecher VF verbindbaren Sätze PS vorgesehene Teilsteuer einheit PL. Die Dateninformationen für die Teilsteuereinheiten und für die von ihnen gesteuerten peripheren Einheiten werden vom Leitungssystem LS2 bzw. LS3 übermittelt. Diese Leitungssysteme zweigen unter Zwischenschaltung einer Busanpassung AN von dem die Verbindung zu der zentralen Steuereinrichtung ZSt herstellenden Leitungssystem LS1 ab.

Für jede Teilnehmerstelle T ist in Teilnehmersatz TS, im Ausführungsbeispiel die Teilnehmersätze TS1 bis TSn vorgesehen. Dieser enthält jeweils in nicht dargestellter Weise u.a. eine Indikationsstelle, die Zustandsänderungen auf der jeweiligen Anschlußleitung erkennt. Die von der zentralen Steuereinrichtung aufgenommenen Informationen haben dann Einstellbefehle für die im Teilnehmersatz enthaltenen Funktionsschalter zur Folge. Solche Einstellbefehle werden in gleicher Weise zu den übrigen Verbindungssätzen übermittelt. Aufgrund einer solchen Einstellinformation wird die Betätigungsart eines Funktionsschalters festgelegt und gleichzeitig der betreffende Funktionsschalter ausgewählt.

Die genannten teilnehmer- bzw. verbindungsindividuellen Sätze sind im Ausführungsbeispiel gleichberechtigt in der sogenannten Umkehrgruppierung an Koppelfeldanschlüsse nur einer einzigen Koppelfeldseite angeschlossen. Der Einsteller KE hat die Aufgabe alle Koppelpunkte, die für eine Verbindung im Koppelnetz KN benötigt werden, zu betätigen. Durch die Verbindungssätze werden die für den Aufbau, das Halten und das Auslösen einer Verbindung unmittelbar am Koppelnetz erforderlichen vermittlungstechnischen Schaltvorgänge ausgeführt. Die für die einzelnen Steuerabläufe notwendigen Programme sind in Speichern, die der zentralen Steuereinrichtung ZSt zugehörig sind, enthalten.

Die erste von einem Teilnehmer eingewählte Ziffer wird ausgewertet und dabei festgestellt, ob eine interne Verbindung oder eine externe Verbindung gewünscht wird. Im letzteren Fall würde dann der weitere Aufbau unter Zuhilfenahme eines Amtssatzes AS erfolgen. Ist eine interne Verbindung beabsichtigt, so wird ein Weg zum gewünschten Teilnehmer gesucht. Es wird der Einsteller KE veranlaßt die Einstellung der zugehörigen Koppelpunkte im Koppelnetz KN vorzunehmen. Ist der Koppelweg in Ordnung, so erfolgt die Durchschaltung und es wird zum rufenden Teilnehmer Freiton und zum gerufenen Teilnehmer das Rufsignal vom Internsatz IS ausgesendet. Ist die rufende Teilnehmerstelle mit einer Tastwahleinrichtung ausgerüstet, so wird der zur Aufnahme der damit eingegebenen Wahlinformation vorhandene Satz WAS ausgelöst. Mit dem Melden der gerufenen Teilnehmerstelle erfolgt dann der Eintritt in den Gesprächszustand. Wird durch einen der beteiligten Teilnehmer eingehängt, so bewirkt dies durch entsprechende Befehle das Auslösen des Teilnehmersatzes TS und des eingestellten Weges. Der zentralen Steuereinheiten zugehörig, die als veränderbare und als nichtveränderbare Speicher sowohl die für die Abwicklung von vermittlungstechnischen Abläufen als auch die für die Abwicklung von anderen, z.B. betriebstechnischen Vorgängen notwendigen Programme enthalten. In den veränderbaren Speichereinheiten werden die jeweiligen Zustandsinformationen zwischengespeichert. In den nichtveränderbaren Speichern sind diejenigen Informationen enthalten, die den grundsätzlichen Verfahrensablauf in der Anlage festlegen. Sie sind für die jeweilige Anlage spezifisch. Im Ausführungsbeispiel enthält die Speichereinheit BT, in der die für die betriebstechnischen Vorgänge notwendigen Informationen abgespeichert sind, eine Einheit DS. In ihr sollen die veränderbaren Kundendaten-Informationen und diejenigen Informationen, die die Dienste und Sonderfunktionen der Fernsprechnebenstellenanlage bestimmen, enthalten sein. Es können darin auch die Ergebnisse einer sicherheitstechnischen Überprüfung zwischengespeichert werden. Aufgrund der betriebstechnischen Informationen wird die Nebenstellenanlage vor ihrer Einschaltung bzw. während des bereits bestehenden Betriebes in einer bestimmten Weise hinsichtlich des Verfahrensablaufes bzw. hinsichtlich der Dienste und Zusatzfunktionen eingerichtet bzw. verändert. Dies betrifft beispielsweise die Zuteilung von Berechtigungen, die Einrichtung von Sonderfunktionen und Diensten, wie beispielsweise Aufschalten, Sammelanschluß-Konferenzteilnehmer usw. und auch die Zuteilung von Kennzahlen, die für die Einleitung bestimmter Funktionsabläufe einzuwählen sind. In der den betriebstechnischen Vorgängen zugeordneten Speichereinheit werden beispielsweise auch die von einem Vermittlungsfernsprecher VF eingegebenen Befehle aufgenommen.

In der Speichereinheit VT sollen diejenigen Informationen abgespeichert sein, die sich auf die Herstellung und auf die Auslösung von vermittlungstechnischen Sprechverbindungen und ggf. von Datenverbindungen beziehen. Es sind also die zur Realisierung der logischen Verknüpfungen und der Abläufe notwendigen Programmfolgen abgespeichert. In einem Arbeitsspeicherteil sind z.B. Kurzzeitdaten, die den Zustand der Verbindungswege, den Schleifenschluß der Teilnehmeranschlußleitung, die gewählten Ziffern oder Gebühreninformationen betreffen, enthalten. Es werden als Eingangsdaten u.a. die Zustandsdaten der einzelnen Sprechstellen übermittelt. Durch den vorgenommenen Vergleich dieser neuen Daten mit den zuletzt abgespeicherten Daten werden Zustandsänderungen erkannt und demzufolge die solchen Änderungen zugeordneten Programme für deren Bearbeitung aufgerufen. Die durch die Bedientätigkeit eines Teilnehmers ausgelösten und vermittlungstechnische Abläufe bedingenden Daten werden jeweils in der dem Teilnehmersatz zugehörigen Anschlußschaltung erfaßt und durch die Steuereinheit in die erforderlichen vewrmittlungstechnischen Funktionen umgesetzt.

Abhängig von der Anlagengröße und den Betriebserfordernissen können ein oder mehrere Vermittlungsfernsprecher VF vorgesehen sein. Die dem Vermittlungsfernsprecher bedienende Person kann über das zugehörige Bedienfeld u.a. an Nebenstellenteilnehmer Gespräche vermitteln. Sie können mit oder ohne Ankündigung an diese Teilnehmer weitergegeben werden. Halbamtsberechtigte Nebenstellenteilnehmer erreichen das öffentliche Vermittlungsamt beispielsweise generell nur unter Einbeziehung eines solchen als Abfragestelle dienenden Vermittlungsfernsprechers VF. In den Fällen, in denen ein Verbindungswunsch zu einem vollamtsberechtigten Teilnehmer vorliegt, dieser Teilnehmer aber besetzt ist oder sich nicht meldet, wird gleichfalls die anstehende Verbindungsanforderung zu der Abfragestelle weitergeleitet.

In den Zeiten, in denen die Abfragestelle nicht durch eine Vermittlungsperson besetzt ist, übernimmt eine andere Nebenstelle die Aufgaben dieser Abfragestelle. Es können hierfür auch mehrere Nebenstellen vorgesehen werden. Diese Nebenstellen werden dann in der betriebsfreien Zeit, insbesondere in der Nachtzeit zu Abfragestellen. Als sogenannte Nachtnebenstellen können eigens dafür vorgesehene Nebenstellenanschlüsse oder auch beliebige Nebenstellenanschlüsse eingerichtet werden. Diese sogenannten Nachtnebenstellen werden einmal programmiert und jeweils an der Abfragestelle VF aktiviert. Zu diesem Zweck wird mit Beginn der betriebsfreien Zeit durch die Vermittlungsperson eine entsprechende Signalisierung z.B. durch die Betätigung eines Schaltelementes oder durch das Ziehen einer Klinke bewirkt.Die Berechtigung , die für die Erfüllung der vermittlungstechnischen Aufgaben der Nachtnebenstelle notwendig sind, können durch einen betriebstechnischen Auftrag eingegeben werden. Dies Nachtnebenstelle ist dann z.B. fernwahl- und/oder aufschalteberechtigt. Es kann auch vorgesehen sein, daß die genannte Signalisierung, die die Umschaltung auf die betriebsfreie Zeit kennzeichnet, auch ferngesteuert ausgelöst wird. Das bedeutet, daß diese Signalisierung auch von einer Sprechstelle, insbesondere von einer externen Sprechstelle über eine einzuwählende Kennzahl und/oder über eine festgelegte Prozedur bewirkt werden kann.

Die der zentralen Steuereinrichtung ZSt zugehörige Speichereinheit VT, in der die für die vermittlungstechnischen Abläufe notwendigen Informationen abgespeichert sein sollen, weist eine Teileinheit CD auf. Darin sollen diejenigen Informationen enthalten sein, die für die Verwaltung der zunächst zum Vermittlungsfernsprecher geleiteten Verbindungen notwendig sind. Aufgrund eines mit der jeweiligen Verbindungsanforderung ausgelösten Anreizes wird ggf. in Abhängigkeit von Leistungsmerkmalen, die am Vermittlungsfernsprecher VF aktiviert wurden, bestimmt, zu welcher Teilnehmerstelle die betreffende Verbindungsanforderung signalisiert werden soll. Sind mehrere Vermittlungsfernsprecher VF vorhanden, so wird der jeweils für die Annahme der Verbindungsanforderung zuständige Vermittlungsfernsprecher vorab festgelegt. Besteht zu dem Zeitpunkt, zu dem die Vermittlungsperson in der geschilderten Weise die Außerbetriebsetzung der Abfragestelle signalisiert, keine Verbindungsanforderung, so wird z.B. in der Teileinheit CD lediglich der Hinweise abgespeichert, daß die Nebenstellenanlage in einen anderen Zustand übergegangen ist. Aufgrund dieses Hinweises erfolgt dann durch Aktivierung entsprechender Teilprogramme eine Umorientierung für die nachfolgend eintreffenden Verbindungsanforderungen. Diese nun zuständigen Teilprogramme stellen sicher, daß z.B. jeder ankommende externe Anruf zu der für die betriebsfreie Zeit als Abfragestelle installierten Nebenstelle, z.B. die Nebenstelle Tx, signalisiert wird.

In der Nebenstellenanlage NA können Verbindungsanforderungen, die generell oder aufgrund eines bestimmten Vermittlungszustandes zunächst der Abfragestelle für die Weiterbehandlung zu übergeben sind, in einer Warteposition gehalten werden. Sie werden ggf. mit einer vorgegebenen Rangfolge durch erneutes Abfragen wieder entgegengenommen. Läßt man zu, daß die Vermittlungsperson sich ausschalten kann, bevor alle Anrufe, die sich in einem solchen Abfrage-oder Parkzustand befinden, abgehandelt sind, so müssen diese Anrufe nach der vorgenommenen Signalisierung, die die Außerbetriebsetzung der Abfragestelle signalisiert, zu einer festgelegten Nebenstelle, z.B. einer Nachtnebenstelle weitergeleitet werden. Man geht nun nicht in der Weise vor, daß abgespeicherte Listen autonom mit einem ausschließlich für diesen Zweck erstellten Programm abgearbeitet werden, sondern es wird auf bereits vorhandene bestimmte vermittlungstechnische Zustände betreffende Programme zurückgegriffen. In Abhängigkeit von der durch die Vermittlungsperson vorgenommenen und z.B. den Übergang auf den Nachtbetrieb kennzeichnenden Signalisierung wird für der Belegtzustand simuliert. Der Belegtzustand einer gewünschten Nebenstelle soll voraussetzungsgemäß dazu führen, daß im normalen Betriebszustand der Nebenstellenanlage der Anruf zur Abfragestelle geleitet wird. Anschließend wird das Auslösen der Verbindung durch den Teilnehmer simuliert. Hierzu wird der Anreiz, der z.B. bei einer ankommenden externen Verbindung durch einen Amtssatz AS übermittelt wird, durch die zentrale Steuereinrichtung erzeugt und entsprechend bearbeitet. Dies ist in der Zeichnung symbolisch durch den Pfeil A angedeutet. Dadurch wird der anstehende Anruf als abgehandelt betrachtet, so daß dann die für die betriebsfreie Zeit vorgesehene Behandlung eines Anrufes aktiviert wird.

Da die zu bearbeitende Verbindungsanforderung tatsächlich noch besteht, leitet dann der sich daraus ergebende und vom betreffenden Amtssatz AS gelieferte Anreiz, der symbolisch durch den Pfeil K dargestellt wird, die für die betriebsfreie Zeit vorgesehene Weiterbehandlung ein. Die Simulation des Auslösevorganges hat nämlich zur Folge, daß in gleicher Weise wie dies der Fall wäre, wenn während der durch die Vermittlungsperson vorgenommenen Signalisierung des Umschaltevorganges kein Anruf ansteht, ein entsprechender Hinweis in der Einheit CD abgespeichert wird. Aufgrund dieses Hinweises wird dann abhängig von dem weiteraufrechterhaltenen Anreiz der betreffende Anruf z.B. zu der festgelegten Nachtnebenstelle signalisiert. Nach der Signalisierung der Umschaltung beispielsweise vom Tagbetrieb auf Nachtbetrieb erfolgt der eigentliche Vollzug dieser Umschaltung durch die Kettung zweier Funktionsabläufe, die im Rahmen normaler Vermittlungszustände sowieso aktivierbar sind. Es muß dabei nur mit einem kurzen neu zu schreibenden Programmablauf dafür gesorgt werden, daß die beiden zu diesen Funktionsabläufen normalerweise führenden Anreize generiert werden. Die notwendige Umorganisation der Anrufe kann damit ohne besonderen zusätzlichen Aufwand vorgenommen werden. Durch die Kettung von zwei vorhandenen Funktionsabläufen ergibt sich noch ein Vorteil für den bei einer Anlage notwendigen Funktionstest dadurch, daß nur jede der beiden Aktivitäten für sich zu überprüfen ist. Bei einem positiven Prüfergebnis kann man dann gleichzeitig auf eine einwandfreie Umschaltefunktion schließen.

Bei der mit Ende der betriebsfreien Zeit vorzunehmenden Rückgabe auf den normalen Anlagebetrieb, z.B. bei der Rückgabe des Nachtbetriebes auf den Tagbetrieb, werden die geschilderten Vorgänge in gleicher Weise aktiviert. Nach der entsprechenden Signalisierung durch die Vermittlungsperson wird also der anstehende Anruf wieder zum Vermittlungsfernsprecher VF geleitet.

**Patentansprüche**

1. Verfahren für eine Fernmeldeanlage, insbesondere für eine Fernsprechnebenanlage, bei der in bestimmten Fällen eine Verbindungsanforderung zunächst zu mindestens einer Abfragestelle gelangt und bei der aufgrund einer besonderen, den Beginn oder das Ende einer vorgegebenen Bedarfszeit, z.B. der betriebsfreien Nachtzeit, kennzeichnenden Signalisierung eine oder mehrere beliebige Nebenstellen, die ggf. diese Abfragestelle hinsichtlich der Betriebsmerkmale und hinsichtlich des Ausbaues ersetzen, für die Entgegennahme der während dieser Bedarfszeit eintreffenden und ihnen signalisierten Verbindungsanforderungen festlegbar sind und wobei für Verbindungsanforderungen, die von der Abfragestelle nicht unmittelbar weiter zu vermitteln sind, die Möglichkeit besteht, diese in einer Warteposition zu halten,
**dadurch gekennzeichnet, daß**
in Abhängigkeit von der erfolgten besonderen Signalisierung bezogen auf die während dieser Signalisierung anstehenden Verbindungsanforderung durch die die vermittlungstechnischen Abläufe steuernden zentralen Steuereinheit (ZSt) Vermittlungszustände simuliert werden, die auf der Grundlage der diesen Zuständen zugeordneten Teilabläufen die Übergabe an die Abfragestelle (VF) und die Auslösung dieser Pseudoverbindung betreffen, und daß dadurch die weiterhin bestehende und einen entsprechenden Anforderungsanreiz bewirkende Verbindungsanforderung in gleicher Weise wie nachfolgende Anforderungen zu der für die Annahme von Anrufen in der vorgegebenen Bedarfszeit festgelegten Nebenstelle (z.B. Tx) signalisiert wird und somit die tatsächliche Umschaltung vollzogen ist.

**2.** Verfahren nach Anspruch 1,
**dadurch gekennzeichnet,** daß
aufgrund der Simulation der Verbindungsauslösung in gleicher Weise, wie dies beim Fehlen einer Verbindungsanforderung zum Zeitpunkt der mit Beginn oder mit dem Ende der vorgegebenen Bedarfszeit vorgenommenen Signalisierung der Fall ist, eine Kennung erzeugt und abgespeichert wird, die jeweils im Zusammenhang mit einer Verbindungsanforderung den für ihre Weiterleitung an die vorab festgelegte Nebenstelle (Tx) notwendige Funktionsablauf aktiviert.

**3.** Verfahren nach Anspruch 1 oder 2,
**dadurch gekennzeichnet,** daß in den Fällen, in denen durch die festgelegte Nebenstelle (Tx) der Anrufschutz als mögliches Leistungsmerkmal aktiviert wurde, dies Aktivierung mit Beginn ihrer Funktion als für die Bedarfszeit zuständige Nebenstelle ignoriert wird.

**Claims**

**1.** Method for a telecommunication exchange, especially a private branch exchange, in which in particular cases a connection request first reaches at least one operator position and in which, due to a special signalling identifying the beginning or the end of a predetermined demand time, for example the non-operational night-time, one or more arbitrary extensions which, if necessary, substitute for this operator position with respect to operating features and with respect to configuration, can be specified for receiving the connection requests arriving during this demand time and signalled to them, and in which the possibility exists of keeping connection requests which do not have to be forwarded directly by the operator position in a waiting position, characterised in that, in dependence on the special signalling which has taken place with respect to the connection request present during this signalling, the central processor (ZSt) controlling the switching sequences simulates switching conditions which, on the basis of part-sequences associated with these conditions, relate to the handover to the operator position (VF) and the releasing of this pseudo-connection, and in that, as a result, the connection request still existing and effecting a corresponding request alert is signalled in the same manner as subsequent requests to the extension (for example Tx) specified for receiving calls within the predetermined demand time and thus the actual switch-over is completed.

**2.** Method according to Claim 1, characterised in that, due to the simulation of the connection release in the same manner as is the case when a connection request is lacking at the time of the signalling effected at the beginning or at the end of the predetermined demand time, an identification is generated and stored which activates, in each case in conjunction with a connection request, the function sequence necessary for forwarding it to the previously specified extension (Tx).

**3.** Method according to Claim 1 or 2, characterised in that in cases where incoming-call protection has been activated as a possible feature by the specified extension (Tx) this activation is ignored when it begins to function as the extension responsible for the demand time.

**Revendications**

**1.** Procédé pour une installation de télécommunications, notamment pour une installation téléphonique supplémentaire, selon lequel, dans des cas déterminés, une demande de liaison parvient tout d'abord à au moins un poste d'interrogation et selon lequel, sur la base d'une signalisation particulière caractérisant le début ou la fin d'un intervalle de temps prédéterminé d'utilisation facultative, par exemple de la durée de la nuit sans service, un ou plusieurs postes supplémentaires quelconques, qui remplacent éventuellement ce poste d'interrogation pour ce qui concerne ses caractéristiques de fonctionnement et sa constitution, peuvent être déterminés pour la réception des demandes de liaison, qui arrivent pendant cet intervalle de temps d'activation et sont signalés à ces postes supplémentaires, et selon lequel pour des demandes de liaison, qui ne doivent pas être retransmises directement à partir du poste d'interrogation, il est possible de conserver ces demandes dans un état d'attente,

caractérisé par le fait qu'en fonction de la signalisation particulière réalisée en ce qui concerne la demande de liaison qui apparaît pendant cette signalisation, l'unité centrale de commande (ZSt), qui commande les cycles techniques de commutation, simule des états de commutation, qui concernent, dans la position de base des cycles partiels associés à ces états, le transfert au poste d'interrogation (VF) et la libération de cette pseudo-liaison, et que, de ce fait, la demande de liaison, qui existe par ailleurs et provoque un déclenchement correspondant d'une demande, est signalée de la même manière que des demandes ultérieures, au poste supplémentaire (par exemple Tx) fixé pour la réception d'appels pendant l'intervalle prédéterminé d'utilisation facultative, et que par conséquent, la commutation effective est exécutée.

2. Procédé suivant la revendication 1, caractérisé par le fait que, sur la base de la simulation de la libération d'une liaison, de la même manière que ceci se produit lors de l'absence d'une demande de liaison à l'instant de la signalisation réalisée au début ou à la fin de l'intervalle prédéterminé d'utilisation facultative, un indicatif est produit et est mémorisé, cet indicatif activant, respectivement en rapport avec une demande de liaison, le cycle fonctionnel nécessaire pour sa retransmission au poste supplémentaire (Tx) fixé au préalable.

3. Procédé suivant la revendication 1 ou 2, caractérisé par le fait que, dans le cas où la protection contre des appels est activée, en tant que caractéristique potentielle possible, par le poste supplémentaire (Tx) déterminé, cette activation est ignorée au début du fonctionnement de ce poste en tant que poste supplémentaire concerné pendant l'intervalle de temps d'activation requis.